# EUROPÄISCHE PATENTANMELDUNG

(11) **EP 1 319 877 A2**
(43) Veröffentlichungstag der Anmeldung: **18.06.2003**
(21) Anmeldenummer: 02026612.8
(22) Anmeldetag: 29.11.2002
(51) Int. Cl.: F16K 11/074

(54) **Umschaltventil**

(30) Priorität: 14.12.2001 DE 10161858
(71) Anmelder: Friedrich Grohe AG & Co. KG, 58675 Hemer (DE)
(72) Erfinder: Pawelzik, Manfred, 59494 Soest (DE)

(57) **Zusammenfassung**

Bei einem Umschaltventil mit einem wenigstens eine Zulauföffnung (11) und wenigstens zwei Ablauföffnungen (12,13) aufweisenden Gehäuse (1), in dem ein als Baueinheit ausgebildeter Drehschieber (2) zur wahlweisen Zuführung des zufließenden Fluids zu einer der Ablauföffnungen (12,13), ohne dass eine völlige Absperrung des Fluiddurchflusses erfolgt, vorgesehen ist, ist vorgeschlagen, dass bezogen auf die jeweils vorhandene Anzahl der Ablauföffnungen (12,13) im Gehäuse (1) eine besondere Baugruppe, bestehend aus einer Ventilsitzscheibe (4a,4b,4c), einer Steuerscheibe (3a,3b,3c), einem Bodenteil (5) und einem Verbindungsmittel, mit einer Drehspindel (21) zur Baueinheit verbindbar ist, wobei im Bodenteil (5) und in der Ventilsitzscheibe (4a,4b,4c) die Durchtrittsöffnungen (41a,41b,41c,41d, 51a,51b) jeweils so ausgebildet sind, dass in der Einbaulage im Gehäuse (1) jeweils eine separate Verbindung zu den einzelnen Auslauföffnungen (12,13) besteht.

## Beschreibung

Die Erfindung betrifft ein Umschaltventil mit einem wenigstens eine Zulauföffnung und wenigstens zwei Ablauföffnungen aufweisenden Gehäuse, in dem ein als Baueinheit ausgebildeter Drehschieber zur wahlweisen Zuführung des zufließenden Fluids zu einer der Ablauföffnungen, ohne dass eine völlige Absperrung des Fluiddurchfluss erfolgt, vorgesehen ist, wobei
- der Drehschieber eine in einem Kopfstück drehbar und gedichtet gehaltene Drehspindel aufweist, mit der eine, wenigstens eine Fluiddurchtrittsöffnung aufweisende Steuerscheibe drehfest, aber axial begrenzt verschiebbar verbunden ist,
- eine, Durchtrittsöffnungen zu den Ablauföffnungen aufweisende Ventilsitzscheibe an der von der Drehspindel abgekehrten Stirnseite der Steuerscheibe angelagert ist, die in der Einbaulage drehfest im Gehäuse gehalten ist,
- in der Steuerscheibe und der Ventilsitzscheibe im Zentrum eine Durchgangsbohrung ausgebildet ist, durch die ein Mittel zur axialen Halterung der beiden Scheiben an der Drehspindel hindurchgreift.

Ein Umschaltventil dieser Art ist aus der DE 36 38 959 A1 bekannt. Bei dieser Umstelleinrichtung sind zur Verbindung mit den Auslassöffnungen Rohrstutzen vorgesehen, die an einem Tragkörper angeordnet sind. Hierbei ist die wahlweise Versorgung von maximal drei separaten Verbrauchern mit Fluid möglich.

Ferner ist aus der Druckschrift DE 196 14 653 A1 ein Absperrventil bekannt, bei dem die Ventilsitzscheibe und die Steuerscheibe auf einem Bodenteil angeordnet sind, wobei das Bodenteil an einer Ventilspindel befestigbar ist, um eine Baueinheit zu bilden. Mit diesem Absperrventil können alternativ zwei Verbraucher mit Fluid versorgt werden. Bei diesem Absperrventil erfolgt jedoch der Zufluss des Fluids durch die Ventilsitzscheibe und die Steuerscheibe.

Der Erfindung liegt die Aufgabe zugrunde, das im Oberbegriff des Anspruchs 1 angegebene Umschaltventil zu verbessern.

Diese Aufgabe wird bei einem gattungsgemäßen Ventil dadurch gelöst, dass bezogen auf die jeweils vorhandene Anzahl der Ablauföffnungen im Gehäuse eine besondere Baugruppe, bestehend aus einer Ventilsitzscheibe, einer Steuerscheibe, einem Bodenteil und einem Verbindungsmittel, mit der Drehspindel zur Baueinheit verbindbar ist, wobei im Bodenteil und in der Ventilsitzscheibe die Durchtrittsöffnungen jeweils so ausgebildet sind, dass in der Einbaulage im Gehäuse jeweils eine separate Verbindung zu einzelnen Auslassöffnungen besteht.

Weitere Ausgestaltungen der Erfindung sind in den Ansprüchen 2 bis 9 angegeben.

Die mit der Erfindung erzielbaren Vorteile bestehen insbesondere darin, dass der Drehschieber mit den verschiedenen Unterbaugruppen, bestehend aus den beiden Ventilscheiben und dem Bodenteil, bestückbar ist, so dass wahlweise mit dem Drehschieber zwei, drei oder vier Verbraucher mit Fluid versorgt werden können. Hierbei kann die Drehspindel mit dem Kopfstück als eine Einheit für alle Varianten verwendet werden, so dass diese Teile in entsprechend hohen Stückzahlen kostengünstig hergestellt werden können. Der erfindungsgemäße Drehschieber kann dabei sowohl in einem separaten Gehäuse als auch in einem Gehäuse für weitere Ventile, z.B. einem Gehäuse für eine Badewannenwassermischbatterie, eingesetzt werden.

In weiterer Ausgestaltung der Erfindung werden vorteilhaft die Durchtrittsöffnungen in den beiden Ventilscheiben als Kreisringausschnitte ausgebildet, so dass bezogen auf den Ventilscheibendurchmesser ein optimaler Querschnitt für den Fluiddurchtritt ermöglicht ist. Hierbei können die einzelnen Durchtrittsöffnungen in der Ventilsitzscheibe lediglich durch Radialstege voneinander getrennt werden, wobei die Radialstege jeweils eine derartige Breite aufweisen, dass mit der Steuerscheibe noch eine sichere Trennung der verschiedenen Durchtrittsöffnungen voneinander ermöglicht wird.

Ein Ausführungsbeispiel der Erfindung ist in der Zeichnung dargestellt und wird im Folgenden näher erläutert. Es zeigt in der Zeichnung
- Figur 1: ein Umschaltventil im Längsschnitt;
- Figur 2: den in Figur 1 gezeigten Drehschieber als Baueinheit im Längsschnitt;
- Figur 3: die in Figur 2 gezeigte Steuerscheibe in Draufsicht;
- Figur 4: die in Figur 2 gezeigte Ventilsitzscheibe in Draufsicht;
- Figur 5: das in Figur 2 gezeigte Paar der Ventilsitzscheiben mit der Steuerscheibe und der Ventilsitzscheibe in Draufsicht, wobei der Durchgang zu einem ersten Verbraucher freigegeben ist;
- Figur 6: das in Figur 5 gezeigte Ventilscheibenpaar, wobei der Durchgang zu einem zweiten Verbraucher freigegeben ist;
- Figur 7: eine andere Ventilsitzscheibe mit Durchtrittsöffnungen für drei Verbraucher in Draufsicht;
- Figur 8: eine andere Steuerscheibe in Draufsicht mit einer Durchtrittsöffnung, die für das Zusammenwirken mit drei der Durchtrittsöffnungen der in Figur 7 gezeigten Ventilsitzscheibe ausgelegt ist;
- Figur 9: die Ventilsitzscheibe gemäß Figur 7 und die Steuerscheibe gemäß Figur 8 zu einem Paar zusammengefügt, wobei die Drehstellung der Steuerscheibe so gewählt ist, dass der Durchgang zu einem ersten Verbraucher freigegeben ist;
- Figur 10: das in Figur 9 gezeigte Ventilscheibenpaar, wobei die Drehstellung der Steuerscheibe so gewählt ist, dass der Durchgang zu einem zweiten Verbraucher freigegeben ist;
- Figur 11: das in Figur 9 gezeigte Ventilscheibenpaar, wobei die Drehstellung der Steuerscheibe so gewählt ist, dass der Durchgang zu einem dritten Verbraucher freigegeben ist;
- Figur 12: eine weitere Ventilsitzscheibe in Draufsicht mit vier Durchtrittsöffnungen;
- Figur 13: eine weitere Steuerscheibe in Draufsicht, deren Durchtrittsöffnung entsprechend den Durchtrittsöffnungen der Ventilsitzscheibe gemäß Figur 12 ausgelegt ist;
- Figur 14: die in Figur 12 gezeigte Ventilsitzscheibe und die in Figur 13 gezeigte Steuerscheibe zu einem Paar zusammengefügt, wobei die Steuerscheibe eine Drehstellung einnimmt, in der der Durchtritt zu einem ersten Verbraucher freigegeben ist;
- Figur 15: das in Figur 14 gezeigte Ventilscheibenpaar, wobei die Steuerscheibe eine Drehstellung einnimmt, in der der Durchtritt zu einem zweiten Verbraucher freigegeben ist;
- Figur 16: das in Figur 14 gezeigte Ventilscheibenpaar, wobei die Steuerscheibe eine Drehstellung einnimmt, in der der Durchtritt zu einem dritten Verbraucher freigegeben ist;
- Figur 17: das in Figur 14 gezeigte Ventilscheibenpaar, wobei die Steuerscheibe eine Drehstellung einnimmt, in der der Durchtritt zu einem vierten Verbraucher freigegeben ist.

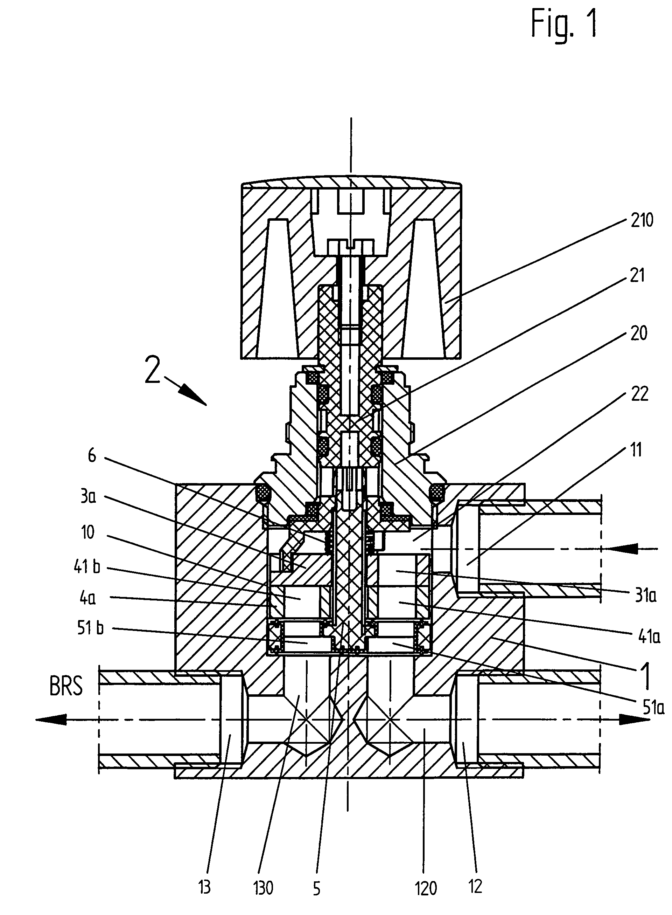

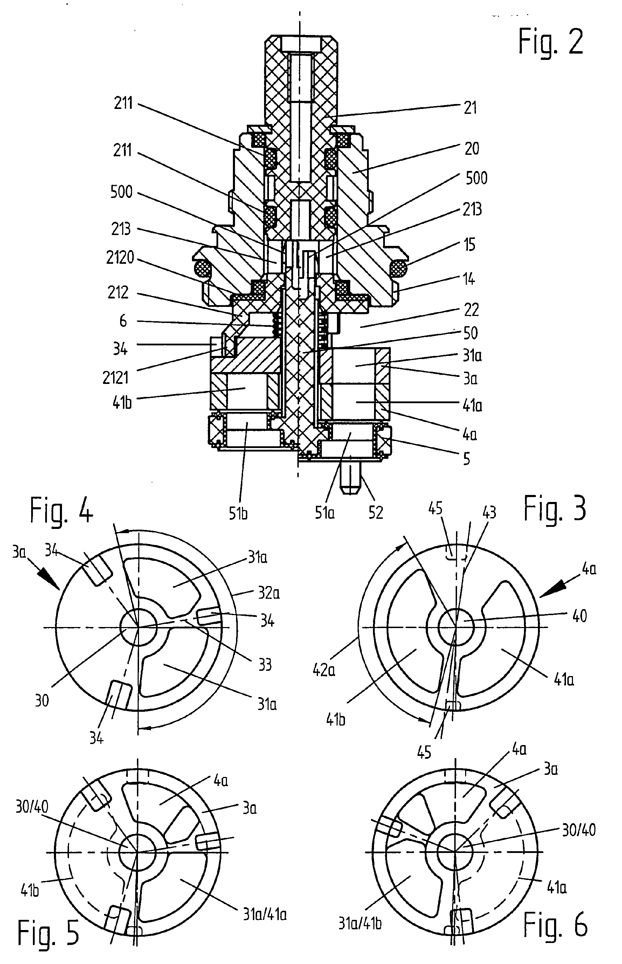

In Figur 1 bis Figur 6 ist ein Umschaltventil zur Steuerung eines zufließenden Fluids zu zwei verschiedenen Verbrauchern gezeigt. In einem Gehäuse 1 ist in einer Gehäuseöffnung 10 ein Drehschieber 2 angeordnet. Der Drehschieber 2 ist als eine Baueinheit ausgebildet, wie es insbesondere aus Figur 2 der Zeichnung zu entnehmen ist, die als Einheit mit einem Kopfstück 20 in ein Gewinde 14 mit einem O-Ring 15 gedichtet in die Gehäuseöffnung 10 einschraubbar ist. Konzentrisch in dem Kopfstück 20 ist eine axial festliegende Drehspindel 21 angeordnet, an deren äußeren Endbereich ein Handgriff 210 befestigbar ist.

Die Baueinheit des Drehschiebers, wie sie in Figur 2 dargestellt ist, besteht aus einem Kopfstück 20, in dem in einer Koaxialbohrung die Drehspindel 21 mit zwei O-Ringen 211 gedichtet angeordnet ist. An einem Endbereich der Drehspindel 21 ist ein Mitnehmer 212 einstückig angeformt. Die Drehspindel 21 ist dabei axial festliegend in dem Kopfstück 20 angeordnet, wobei sich der Mitnehmer axial mit Hilfe einer Gleitscheibe 2120 an einer stirnseitigen Schulter des Kopfstücks 20 abstützt.
Koaxial zur Drehspindel 21 ist ein Bodenteil 5 vorgesehen, dass im Zentrum einen axial vorstehenden Ansatz 50 trägt, der eine Ventilsitzscheibe 4a und eine Steuerscheibe 3a durchgreift, wobei der vorstehende Endbereich des Ansatzes 50 mit Rastelementen 500 versehen ist, die in eine Koaxialbohrung der Drehspindel 21 einführbar und in der Stecklage verrastbar sind, so dass die Baugruppe bestehend aus Steuerscheibe 3a, Ventilsitzscheibe 4a und Boden 5 an dem Drehschieber lösbar befestigt sind. Die Rastelemente fassen in der Stecklage in eine Ringnut in der Drehspindel ein, so dass die Drehspindel drehbar ist ohne das Bodenteil mitzudrehen. Im Bereich der Ringnut sind in der Drehspindel 21 Radialschlitze 213 ausgebildet, durch die mit einem Werkzeug die Rastelemente aus der Rastposition auslenkbar sind, so dass die Verrastung lösbar ist.
In einem Freiraum 22 zwischen der Steuerscheibe 3a und der Stirnseite des Mitnehmers 212 ist koaxial zum Ansatz 50 eine Druckfeder 6 vorgesehen, die sich einerseits an der Stirnseite des Mitnehmers 212 und andererseits an der gegenüberliegenden Stirnseite der Steuerscheibe 3a abstützt und die Steuerscheibe 3a mit der erforderlichen Anpresskraft gegen die Ventilsitzscheibe 4a und die Ventilsitzscheibe 4a gegen das Bodenteil 5 drückt.
Das Bodenteil 5 weist außerdem einen Axialstift 52 auf, mit dem das Bodenteil 5 in der Stecklage im Gehäuse 1 drehfest gehalten wird. An der Ventilsitzscheibe 4a sind außerdem Ausnehmungen 45 vorgesehen, in die entsprechende Zapfen - in der Zeichnung nicht dargestellt - des Bodenteils einfassen, so dass in der Stecklage die Ventilsitzscheibe 4a drehfest mit dem Bodenteil 5 verbunden ist.
Die Steuerscheibe 3a weist ebenfalls an der dem Mitnehmer 212 zugekehrten Stirnseite Ausnehmungen 34 auf, in die in der Stecklage Vorsprünge 2121 einfassen und eine drehfeste, aber axial begrenzt verschiebbare Verbindung zum Mitnehmer 212 der Drehspindel 21 herstellen.

Im Bodenteil 5 ist eine erste Durchtrittsöffnung 51a zu einem ersten Verbraucher und eine zweite Durchtrittsöffnung 51b zu einem zweiten Verbraucher ausgebildet. Im Bereich der Durchtrittsöffnungen 51a, 51b sind Dichtungen im Bodenteil 5 ausgebildet, so dass in der Stecklage die Durchtrittsöffnungen 51a, 51b einerseits mit im Gehäuse 1 ausgebildeten separaten Kanälen 120, 130 und andererseits mit Durchtrittsöffnungen 41a, 41b in der Ventilsitzscheibe 4a gedichtet verbunden sind.
In der Ventilsitzscheibe 4a ist im Zentrum außerdem eine Durchgangsbohrung 40 ausgebildet, wie es insbesondere aus Figur 3 der Zeichnung zu entnehmen ist. Konzentrisch zur Durchgangsbohrung 40 sind in der Scheibe jeweils mit Abstand zu einer Symmetrieachse 43 zu beiden Seiten gleiche kreisringausschnittförmige Durchtrittsöffnungen 41a, 41b ausgebildet, wobei die radialen Begrenzungsflächen leicht geneigt zum Radius aufgebildet sind. Die beiden Durchtrittsöffnungen 41a, 41b erstrecken sich dabei jeweils über einen Kreisbogenwinkel 42a von etwa 135°.
Die Steuerscheibe 3a hat im Zentrum ebenfalls eine Durchgangsbohrung 30, zu der konzentrisch eine kreisringausschnittförmige Durchtrittsöffnung 31a ausgebildet ist, wie es insbesondere aus Figur 4 der Zeichnung zu entnehmen ist. Die Durchtrittsöffnung 31a erstreckt sich hierbei über einen Kreisbogenwinkel 32a von etwa 190°, wobei aus Stabilitätsgründen die Durchtrittsöffnung 31a im mittleren Bogenbereich von einem Radialsteg 33 unterteilt ist.

Der in Figur 2 gezeigte Drehschieber 2 kann als Baueinheit in die Gehäuseöffnung 10 eingeführt und mit dem Kopfstück 20 gedichtet mit dem Gehäuse 1 verschraubt werden. Hierbei gelangt das Bodenteil 5 am Grund der Gehäuseöffnung 10 zur Anlage, wobei der Axialstift 52 in eine entsprechende Öffnung im Gehäuse 1 einfasst und eine drehfeste Kopplung bewirkt. Außerdem wird der Boden axial entgegen der Kraft der Druckfeder 6 um einen geringen Betrag in die Koaxialbohrung der Drehspindel 21 eingeschoben, so dass die Drehspindel 21, ohne dass die Rastelemente 500 an der Schulter im Inneren der Drehspindel 21 anliegen, bewegt werden kann. Das über eine Zulauföffnung 11 in das Gehäuse 1 eingeführte Fluid, z.B. Mischwasser, gelangt in den Freiraum 22 zwischen Kopfstück 20 und Steuerscheibe 3a, wird hier umgelenkt und tritt durch die Durchtrittsöffnungen 31a, 41a, 51a in einen Kanal 120 in dem Gehäuse 1 ein, von dem es einer Ablauföffnung 12 im Gehäuse 1 zugeführt wird. Die Drehstellung der Steuerscheibe 3a zur Ventilsitzscheibe 4a ist hierbei besonders deutlich in Figur 5 der Zeichnung dargestellt.
Wird nun vom Benutzer über den Handgriff 210 die Drehspindel 21 um etwa 180° gedreht, so wird von der Durchtrittsöffnung 31a der Durchtritt zu den Durchtrittsöffnungen 41b, 51b und einem Gehäusekanal 130 freigegeben, während die Durchtrittsöffnung 41a in der Ventilsitzscheibe 4a von der Steuerscheibe 3a abgesperrt wird, wie es in insbesondere aus der Zeichnung Figur 6 ersichtlich ist. Das durch den Kanal 130 geführte Fluid wird der zweiten Ablauföffnung 13 des Gehäuses 1 zugeführt.

Alternativ kann die in Figur 2 gezeigte Baueinheit in einfacher Weise für den Einsatz in ein Gehäuse mit Auslassöffnungen für drei oder vier Verbraucher umgerüstet werden.

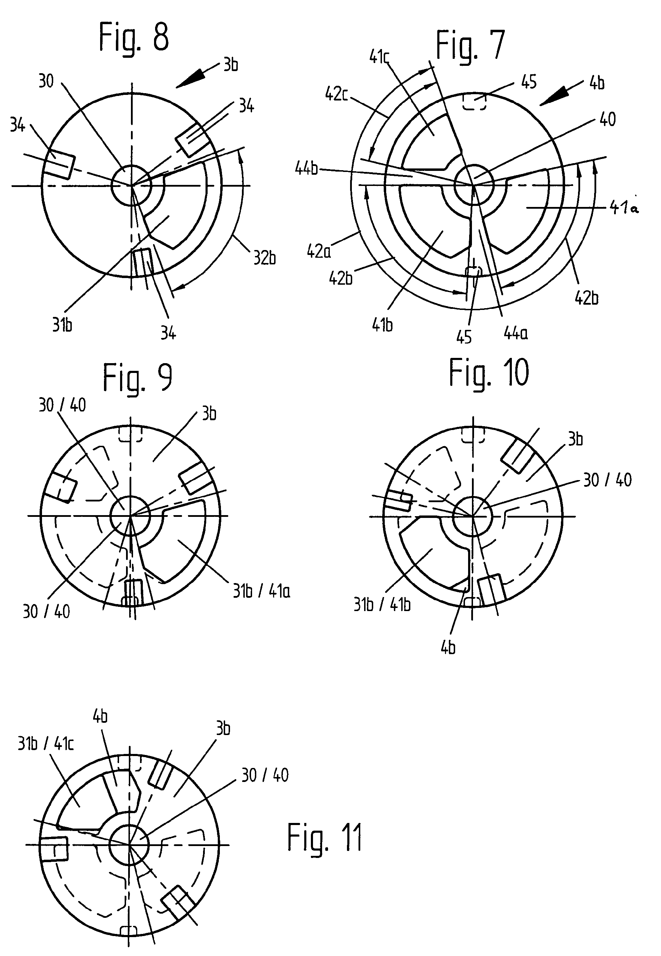

In Figur 7 bis 11 ist ein Scheibenpaar für die wahlweise Umstellung zu drei Verbrauchern dargestellt.
In Figur 7 der Zeichnung ist eine Ventilsitzscheibe 4b dargestellt, in der wiederum im Zentrum eine Durchgangsbohrung 40 ausgebildet ist, während konzentrisch zur Durchgangsbohrung 40 Durchtrittsöffnungen 41a, 41b, 41c als Kreisringausschnitte vorgesehen sind. Die drei Durchtrittsöffnungen erstrecken sich über einen Kreisbogenwinkel 42a von etwa 275°. Die Durchtrittsöffnung 41b ist von den Durchtrittsöffnungen 41a, 41c jeweils durch Radialstege 44a, 44b getrennt, wobei die Breite der Radialstege 44a, 44b so ausgebildet ist, dass eine sichere Trennung der Durchtrittsöffnungen 41a, 41b, 41c voneinander mit einer Steuerscheibe 3b gewährleistet ist.
In Figur 8 ist die Steuerscheibe 3b in Draufsicht dargestellt, wobei konzentrisch zur Durchgangsbohrung 30 eine Durchtrittsöffnung 31b als konzentrischer Kreisringausschnitt ausgebildet ist. Die Durchgangsbohrung 31b erstreckt sich dabei um einen Kreisbogenwinkel 32b von etwa 90°.
In Figur 9 ist die Ventilsitzscheibe 4b und die Steuerscheibe 3b zu einem Paar zusammengefügt dargestellt, wobei die Steuerscheibe 3b sich in einer Drehstellung befindet, in der der Durchgang zu einem ersten Verbraucher freigegeben ist, während der Durchgang zu dem zweiten und dritten Verbraucher von der Steuerscheibe 3b versperrt ist.
In Figur 10 befindet sich die Steuerscheibe 3b in einer Drehstellung zur Ventilsitzscheibe 4b, in der der Durchtritt für einen zweiten Verbraucher freigegeben ist.
In Figur 11 befindet sich die Steuerscheibe 3b in einer Drehstellung zur Ventilsitzscheibe 4b, in der der Durchtritt zu einem dritten Verbraucher freigegeben ist.

In Figur 13 bis 17 ist ein Paar von Ventilscheiben dargestellt, mit denen eine separate Versorgung von vier Verbrauchern mit Fluid wahlweise erfolgen kann, wobei die beiden Ventilscheiben ebenfalls mit einem entsprechend gestalteten Bodenteil als Untergruppe an der Drehspindel 21 zu einer Drehschieber-Baueinheit zusammengefügt werden können.

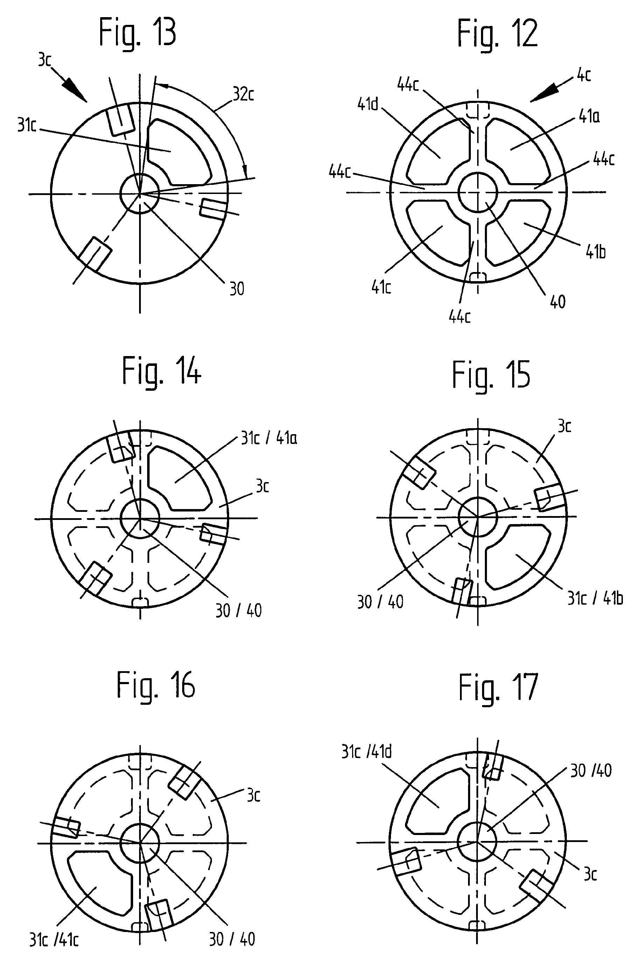

In Figur 12 ist eine diesbezügliche Ventilsitzscheibe 4c dargestellt, in der konzentrisch zur Durchgangsbohrung 40 als Kreisringausschnitte Durchtrittsöffnungen 41a, 41b, 41c, 41d angeordnet sind, die sich über einen Kreisbogenwinkel von 360° erstrecken. Die einzelnen Durchtrittsöffnungen sind hierbei lediglich durch einen Radialsteg 44c getrennt, dessen Breite so bemessen ist, dass eine sichere Trennung der Durchtrittsöffnungen mit einer Steuerscheibe 3c möglich ist.

In Figur 13 ist die Steuerscheibe 3c dargestellt, die eine Durchtrittsöffnung 31c aufweist, die ebenfalls entsprechend kreisringausschnittförmig ausgebildet ist, wobei der Kreisbogenwinkel 32c etwa 75° beträgt. In Figur 14 bis Figur 17 ist die Ventilsitzscheibe 4c mit der Steuerscheibe 3c zu einem Scheibenpaar zusammengefasst, wobei die Steuerscheibe 3c in den verschiedenen Drehstellungen gezeigt ist, in denen der Durchtritt zum ersten oder zum zweiten oder zum dritten oder zum vierten Verbraucher freigegeben ist.

Zu den in Figur 7 bis 17 dargestellten alternativ ausgebildeten Ventilscheibenpaaren ist jeweils ein mit drei oder vier Durchtrittsöffnungen geändertes Bodenteil - in der Zeichnung nicht dargestellt - einzusetzen, das in seinen anderen Abmessungen dem Bodenteil 5 entspricht. Auch ist das Gehäuse - ebenfalls in der Zeichnung nicht dargestellt - zusätzlich zu dem Gehäuse 1 mit einem weiteren oder zwei weiteren Kanälen mit jeweils separaten Ablauföffnungen zu versehen.

## Patentansprüche

1. Umschaltventil mit einem wenigstens eine Zulauföffnung (11) und wenigstens zwei Ablauföffnungen (12,13) aufweisenden Gehäuse (1), in dem ein als Baueinheit ausgebildeter Drehschieber (2) zur wahlweisen Zuführung des zufließenden Fluids zu einer der Ablauföffnungen (12,13), ohne dass eine völlige Absperrung des Fluiddurchflusses erfolgt, vorgesehen ist, wobei
- der Drehschieber (2) eine in einem Kopfstück (20) drehbar und gedichtet gehaltene Drehspindel (21) aufweist, mit der eine, wenigstens eine Fluiddurchtrittsöffnung aufweisende Steuerscheibe (3a,3b,3c) drehfest, aber axial begrenzt verschiebbar verbunden ist,
- eine, Durchtrittsöffnungen (41a,41b,41c,41d) zu den Ablauföffnungen (12,13) aufweisende Ventilsitzscheibe (4a,4b,4c) an der von der Drehspindel (21) abgekehrten Stirnseite der Steuerscheibe (3a,3b,3c) angelagert ist, die in der Einbaulage drehfest im Gehäuse (1) gehalten ist,
- in der Steuerscheibe (3a,3b,3c) und der Ventilsitzscheibe (4a,4b,4c) im Zentrum eine Durchgangsbohrung (30,40) ausgebildet ist, durch die ein Mittel zur axialen Halterung der beiden Scheiben an der Drehspindel (21) innen durchgreift,
**dadurch gekennzeichnet, dass** bezogen auf die jeweils vorhandene Anzahl der Ablauföffnungen (12, 13) im Gehäuse (1) eine besondere Baugruppe bestehend aus einer Ventilsitzscheibe (4a, 4b, 4c), einer Steuerscheibe (3a, 3b, 3c), einem Bodenteil (5) und einem Verbindungsmittel, mit der Drehspindel (21) zur Baueinheit verbindbar ist, wobei im Bodenteil (5) und in der Ventilsitzscheibe (4a, 4b, 4c) die Durchtrittsöffnungen (41a, 41b, 41c, 41d, 51a, 51b) jeweils so ausgebildet sind, dass in der Einbaulage im Gehäuse (1) jeweils eine separate Verbindung zu den einzelnen Auslauföffnungen (12, 13) besteht.

2. Umschaltventil nach Anspruch 1, **dadurch gekennzeichnet, dass** die Zulauföffnung (11) im Gehäuse (1) radial in einem Freiraum (22) mündet, der einerseits vom Kopfstück (20) und andererseits von der Steuerscheibe (3a, 3b, 3c) begrenzt ist.

3. Umschaltventil nach Anspruch 1 oder 2, **dadurch gekennzeichnet, dass** die Steuerscheibe (3a) mit einer kreisringausschnittförmigen Durchtrittsöffnung (31a) versehen ist, die sich über einen Kreisbogenwinkel (32a) von etwa 190° erstreckt, während die Ventilsitzscheibe (4a) zwei gleichgestaltete kreisringausschnittförmige Durchtrittsöffnungen (41a, 41b) für je einen separaten Verbraucher aufweist, die zu beiden Seiten mit Abstand zu einer Symmetrieachse (43) angeordnet und sich jeweils über einen Kreisbogenwinkel (42a) von etwa 135° erstrecken.

4. Umschaltventil nach Anspruch 3, **dadurch gekennzeichnet, dass** die kreisringausschnittförmige Durchtrittsöffnung (31a) in der Steuerscheibe (3a) mit einem Radialsteg (33) unterteilt ist.

5. Umschaltventil nach Anspruch 1 oder 2, **dadurch gekennzeichnet, dass** die Steuerscheibe (3b) eine kreisringausschnittförmige Durchtrittsöffnung (31b) aufweist, die sich über einen Kreisbogenwinkel (32b) von etwa 90° erstreckt, wobei die Ventilsitzscheibe (4b) drei konzentrisch angeordnete kreisringausschnittförmige Durchtrittsöffnungen (41a, 41b, 41c) für drei Verbraucher aufweist, wobei die mittlere Durchtrittsöffnung (41b) jeweils mit einem Radialsteg (44a, 44b) von den äußeren Durchtrittsöffnungen (41a, 41c) getrennt ist und die drei Durchtrittsöffnungen (41a, 41b, 41c) sich über einen Kreisbogenwinkel (42a) von etwa 275° erstrecken.

6. Umschaltventil nach Anspruch 5, **dadurch gekennzeichnet, dass** zwei Durchtrittsöffnungen (41a, 41b) in der Ventilsitzscheibe (4b) einen Kreisbogenwinkel (42b) von jeweils etwa 90° aufweisen, während die dritte außengelegene Durchtrittsöffnung (41c) einen Kreisbogenwinkel (42c) von etwa 58° hat.

7. Umschaltventil nach Anspruch 1 oder 2, **dadurch gekennzeichnet, dass** die Ventilsitzscheibe (4c) vier kreisringausschnittförmige Durchtrittsöffnungen (41a, 41b, 41c, 41d) aufweist, die sich über einen Kreisbogenwinkel von 360° erstrecken, wobei die Durchtrittsöffnungen (41a, 41b, 41c, 41d) voneinander jeweils durch einen Radialsteg (44c) getrennt sind, während die Steuerscheibe (3c) eine konzentrische kreisringförmige Durchtrittsöffnung (31c) aufweist, die sich über einen Kreisbogenwinkel erstreckt, der kleiner als 90° ist.

8. Umschaltventil nach Anspruch 7, **dadurch gekennzeichnet, dass** die Durchtrittsöffnungen (41a, 41b, 41c, 41d) in der Ventilsitzscheibe (4c) gleich groß sind und die Durchtrittsöffnung (31c) in der Steuerscheibe (3c) sich über einen Kreisbogenwinkel (32c) von etwa 75° erstreckt.

9. Umschaltventil nach wenigstens einem der vorhergehenden Ansprüche, **dadurch gekennzeichnet, dass** die Radialstege (44a, 44b, 44c) in der Ventilsitzscheibe (4b, 4c) jeweils eine derartige Breite aufweisen, dass mit der Steuerscheibe (3b, 3c) eine sichere Trennung der verschiedenen Durchtrittsöffnungen (41a, 41b, 41c, 41d) voneinander ermöglicht ist.
